# FASCICULE DE BREVET EUROPEEN

(11) **EP 3 157 075 B1**
(45) Date de publication et mention de la délivrance du brevet: **18.09.2019**
(21) Numéro de dépôt: 16190873.6
(22) Date de dépôt: 27.09.2016
(51) Int. Cl.: H01M 2/10, H01M 2/20, H01M 10/42

(54) **DISPOSITIF D'ALIMENTATION OU DE COMMANDE D'UN MOTEUR ÉLECTRIQUE**
VERSORGUNGS- ODER STEUERUNGSVORRICHTUNG EINES ELEKTROMOTORS
DEVICE FOR SUPPLYING OR CONTROLLING AN ELECTRIC MOTOR

(30) Priorité: 16.10.2015 FR 1559842
(43) Date de publication de la demande: 19.04.2017
(73) Titulaire: BUBENDORFF Société Anonyme, 68220 Attenschwiller (FR)
(72) Inventeur: BIRKER, Arnaud, 68440 Dietwiller (FR)
(74) Mandataire: Cabinet Bleger-Rhein-Poupon

(56) Documents cités:
- WO-A1-2015/104771
- WO-A1-2015/169318
- US-A1- 2015 140 364
- US-A1- 2015 214 519

## Description

La présente invention a trait à un dispositif d'alimentation ou de commande d'un moteur électrique.

Cette invention concerne le domaine de la fabrication des dispositifs conçus pour commander un moteur électrique ou conçus pour alimenter en énergie électrique un tel moteur électrique. Cette invention trouvera une application particulièrement appropriée, mais cependant aucunement limitative, dans le cadre d'un système d'occultation motorisé comportant un tablier, un moteur d'entraînement de ce tablier, des moyens d'accumulation d'énergie électrique pour alimenter ledit moteur en énergie électrique, ainsi que des panneaux photovoltaïques pour charger les moyens d'accumulation d'énergie.

L'on connait, d'ores et déjà, des dispositifs de commande d'un moteur électrique, de tels dispositifs de commande adoptant la forme d'une télécommande.

De tels dispositifs comportent au moins une batterie, une carte de circuit imprimé, des moyens de connexion électrique entre la ou les batteries et la carte de circuit imprimé, ainsi que des moyens d'immobilisation de cette ou de ces batteries par rapport à cette carte de circuit imprimé.

En fait, ces moyens de connexion et/ou ces moyens d'immobilisation peuvent être constitués par deux têtes de connexion, soudées sur la carte de circuit imprimé, et entre lesquelles la batterie est engagée en force. Un tel engagement et, surtout, le maintien de cette batterie entre ces deux têtes de connexion a pour effet d'exercer une contrainte très importante sur ces têtes de connexion. Avec le temps, cette contrainte engendre une fatigue des têtes de connexion qui se traduit par un relâchement du maintien de la batterie et/ou par une diminution de l'efficacité de la connexion électrique. Une telle contrainte peut, également, entraîner une détérioration des têtes de connexion et/ou des soudures ce qui se traduit par une libération de la batterie et une interruption de la connexion électrique. Un autre inconvénient consiste en ce que les têtes de connexion et/ou la batterie se présentent de manière saillante et/ou en porte-à faux par rapport à la carte de circuit imprimé.

Par le document US2015/0140364 on connait un dispositif d'alimentation comportant une carte de circuit imprimé, au moins une batterie, des moyens de connexion pour connecter électriquement la carte et la ou les batteries, ainsi que des moyens d'immobilisation pour immobiliser la ou les batteries par rapport à la carte. Cette carte comporte des orifices à l'intérieur desquels sont engagées des pattes de connexion, que comportent les moyens de connexion, et qui sont connectées électriquement à cette carte par soudure.

Dans le document US2015/0214519 il est divulgué un dispositif d'alimentation comportant une carte de circuit imprimé, au moins une batterie, des moyens de connexion pour connecter électriquement la carte et la ou les batteries, ainsi que des moyens d'immobilisation (une vis) pour immobiliser la ou les batteries par rapport à la carte. Ce dispositif comporte, encore, un ensemble amovible comportant la ou les batteries ainsi qu'au moins une tête de connexion équipant cette ou ces batteries. Dans ce dispositif, la carte comporte un logement à l'intérieur duquel sont immobilisés les moyens d'immobilisation (la vis) de la ou des batteries par rapport à la carte.

La présente invention se veut de remédier aux inconvénients des dispositifs de l'état de la technique.

A cet effet, l'invention concerne un dispositif d'alimentation ou de commande d'un moteur électrique, ce dispositif comportant :
- une carte de circuit imprimé comportant un logement;
- au moins une batterie ;
- des moyens de connexion pour connecter électriquement la carte et la ou les batteries ;
- des moyens d'immobilisation pour immobiliser la ou les batteries par rapport à la carte ;
- un ensemble amovible comportant, d'une part, la ou les batteries et, d'autre part, au moins une tête de connexion équipant cette ou ces batteries.

Ce dispositif est caractérisé par le fait que :
- ledit ensemble amovible est positionné à l'intérieur du logement de la carte ;
- les moyens de connexion comportent, d'une part, au moins un organe élastique déformé, que comportent la ou les têtes de connexion de l'ensemble amovible, et qui coopère avec ladite carte ainsi qu'avec la ou les batteries et, d'autre part, au moins un contact électrique, que comporte la carte, et qui coopère, chacun, avec ledit ou l'un desdits organes élastiques déformés.

Une autre caractéristique consiste en ce que, lorsque l'ensemble amovible est positionné à l'intérieur du logement de la carte, le ou les organes élastiques sont déformés et que, en étant déformés, ce ou ces organes élastiques coopèrent avec ladite carte (plus particulièrement avec le ou les contacts électriques de cette carte) ainsi qu'avec la ou les batteries, ceci pour assurer au moins une connexion électrique entre la carte et la ou les batteries.

Une autre caractéristique consiste en ce que l'ensemble amovible comporte deux têtes de connexion dont l'une équipe l'une des deux extrémités de la ou des batteries tandis que l'autre équipe l'autre des deux extrémités de cette ou de ces batteries.

Une caractéristique additionnelle concerne le fait que l'ensemble amovible comporte une pluralité de batteries tandis que la ou les têtes de connexion comportent une pluralité d'organes élastiques déformés pour connecter individuellement chaque batterie à la carte.

Selon une autre caractéristique, l'ensemble amovible comporte un support, recevant la ou les batteries, et comportant, d'une part, deux têtes de connexion et, d'autre part, une embase à partir de laquelle s'étendent ces deux têtes de connexion.

Encore une autre caractéristique consiste en ce que le logement, que comporte la carte, adopte la forme d'un trou traversant et/ou est constitué par une découpe de la carte.

En fait, le ou les organes élastiques déformés sont constitués par une lame élastique, un ressort ou analogue.

Ainsi, le dispositif conforme à l'invention comporte un ensemble amovible comportant au moins une tête de connexion équipant la ou les batteries.

Cette caractéristique permet, avantageusement, d'éviter d'équiper la carte de circuit imprimé avec une telle tête de connexion et permet, en particulier, d'éviter une soudure d'une telle tête de connexion sur une telle carte de circuit imprimé.

De plus et d'une part, la ou les têtes de connexion de l'ensemble amovible comportent au moins un organe élastique déformé, que comportent les moyens de connexion entre la carte et la ou les batteries, et qui coopère avec la ou les batteries de cet ensemble amovible. D'autre part, la carte comporte au moins un contact électrique, que comportent ces moyens de connexion, et qui coopère avec ledit ou lesdits organes élastiques déformés.

Ces caractéristiques permettent, avantageusement et uniquement en équipant ladite carte avec un tel ensemble amovible (plus particulièrement en engageant cet ensemble amovible à l'intérieur du logement de la carte), d'assurer la connexion électrique entre cette carte et la ou les batteries de l'ensemble amovible.

Cette carte de circuit imprimé comporte un logement à l'intérieur duquel est positionné (voire immobilisé de manière réversible) l'ensemble amovible.

De manière avantageuse, une telle configuration permet d'éviter qu'un tel ensemble amovible soit en porte-à-faux par rapport à la carte de circuit imprimé et permet, en particulier, de centrer une batterie ou une pluralité de batteries dans un volume donné par rapport à ladite carte. Une telle configuration permet, également, d'améliorer la compacité du dispositif ce qui autorise, alors, avantageusement, d'envisager le positionnement du dispositif selon l'invention à l'intérieur d'un tube moteur que comporte un système d'occultation motorisé.

Les moyens de connexion comportent au moins un organe élastique déformé, que comportent la ou les têtes de connexion, et qui coopère avec cette ou ces têtes de connexion, avec la ou les batteries, ainsi qu'avec la carte de circuit imprimé.

Ainsi, cette ou ces têtes de connexion comportent au moins un tel organe élastique déformé ce qui permet, avantageusement, d'éviter d'associer un tel organe élastique déformé à la carte de circuit imprimé, notamment par l'intermédiaire d'une soudure susceptible de se détériorer sous l'effet d'une contrainte.

On observera que le fait que cet organe élastique soit déformé implique que cet organe élastique est sous contrainte. Aussi, en étant sous contrainte et en réaction à cette contrainte, cet organe élastique exerce une action, plus particulièrement sous forme d'une pression.

En particulier, un tel organe élastique déformé (et, donc, sous contrainte) exerce une action directement sur la tête de connexion avec laquelle un tel organe élastique déformé coopère. Ceci permet, avantageusement, d'assurer une fixation et/ou une immobilisation d'un tel organe élastique déformé par rapport à une telle tête de connexion.

Un tel organe élastique déformé exerce, également, une action sur la batterie avec laquelle un tel organe élastique déformé coopère. Ceci permet, avantageusement, d'une part, d'assurer une connexion électrique appropriée et efficace entre un tel organe élastique déformé et une telle batterie et, d'autre part, un maintien de cette batterie au sein de l'ensemble amovible.

De plus, un tel organe élastique déformé exerce, aussi, une action sur la carte de circuit imprimé.

Ceci permet, avantageusement, d'équiper la carte de circuit imprimé avec au moins un contact électrique avec lequel coopère un tel organe élastique, ceci pour une connexion électrique plus efficace tout en évitant d'avoir recours à un connecteur.

De plus, en exerçant une action directement sur la carte de circuit imprimé, on évite, avantageusement, d'exercer une action sur une pièce intermédiaire, notamment sur une pièce intermédiaire fragile et/ou soudée.

En outre, une telle action est exercée sur la carte de circuit imprimé qui présente une rigidité supérieure à celle d'une telle pièce intermédiaire ce qui permet, avantageusement, d'envisager d'exercer une action de plus forte intensité, ce qui permet d'améliorer la connexion.

Finalement, l'action exercée par un tel organe élastique permet, avantageusement, d'assurer la connexion électrique entre la ou les batteries et ladite carte, ceci en étant sûr de l'efficacité et de la qualité de cette connexion.

D'autres buts et avantages de la présente invention apparaîtront au cours de la description qui va suivre se rapportant à des modes de réalisation qui ne sont donnés qu'à titre d'exemples indicatifs et non limitatifs.

La compréhension de cette description sera facilitée en se référant aux dessins joints en annexe et dans lesquels :
- la figure 1 est une vue schématisée et en perspective du dispositif conforme à l'invention ;
- la figure 2 est une vue schématisée et de dessus de la carte de circuit imprimé que comporte le dispositif conforme à l'invention ;
- la figure 3 est une vue schématisée du support que comporte l'ensemble amovible, ceci dans une configuration déployée.

La présente invention concerne le domaine de la fabrication des dispositifs conçus pour commander un moteur électrique ou conçus pour alimenter en énergie électrique un tel moteur électrique.

L'invention concerne, alors, un dispositif 1 d'alimentation ou de commande d'un moteur électrique.

Un tel dispositif 1 comporte une carte de circuit imprimé 2 qui, dans la suite de la description et pour des raisons de simplification, sera dénommée « carte 2 ».

Ledit dispositif 1 comporte, également, au moins une batterie (3 ; 3' ; 3").

Une telle batterie (3 ; 3' ; 3") présente deux extrémités, plus particulièrement opposées, dont chacune peut comporter une borne électrique, plus particulièrement de polarité opposée.

On observera que, dans le cas d'un dispositif 1 d'alimentation d'un moteur électrique que comporte un système d'occultation motorisé, une telle batterie (3 ; 3' ; 3") peut être de type rechargeable, plus particulièrement par l'intermédiaire d'au moins un panneau photovoltaïque que comporte ledit système d'occultation motorisé.

Ce dispositif 1 comporte, encore, des moyens de connexion 4 pour connecter électriquement la carte 2 et la ou les batteries (3 ; 3' ; 3").

Ce dispositif 1 comporte, également, des moyens d'immobilisation 5 pour immobiliser la ou les batteries (3 ; 3' ; 3") par rapport à ladite carte 2.

Selon l'invention, ce dispositif 1 comporte un ensemble amovible 6 comportant, d'une part, la ou les batteries (3 ; 3' ; 3") et, d'autre part, au moins une tête de connexion (7 ; 7') équipant cette ou ces batteries (3 ; 3' ; 3").

Un premier mode de réalisation non représenté consiste en ce que l'ensemble amovible 6 comporte une unique tête de connexion 7 équipant une des deux extrémités de la batterie 3 ou des batteries (3 ; 3' ; 3").

Cependant, un mode préféré de réalisation consiste en ce que l'ensemble amovible 6 comporte deux têtes de connexion (7 ; 7') dont l'une 7 équipe l'une des deux extrémités de la ou des batteries (3 ; 3' ; 3") tandis que l'autre 7' équipe l'autre des deux extrémités de cette ou de ces batteries (3 ; 3' ; 3").

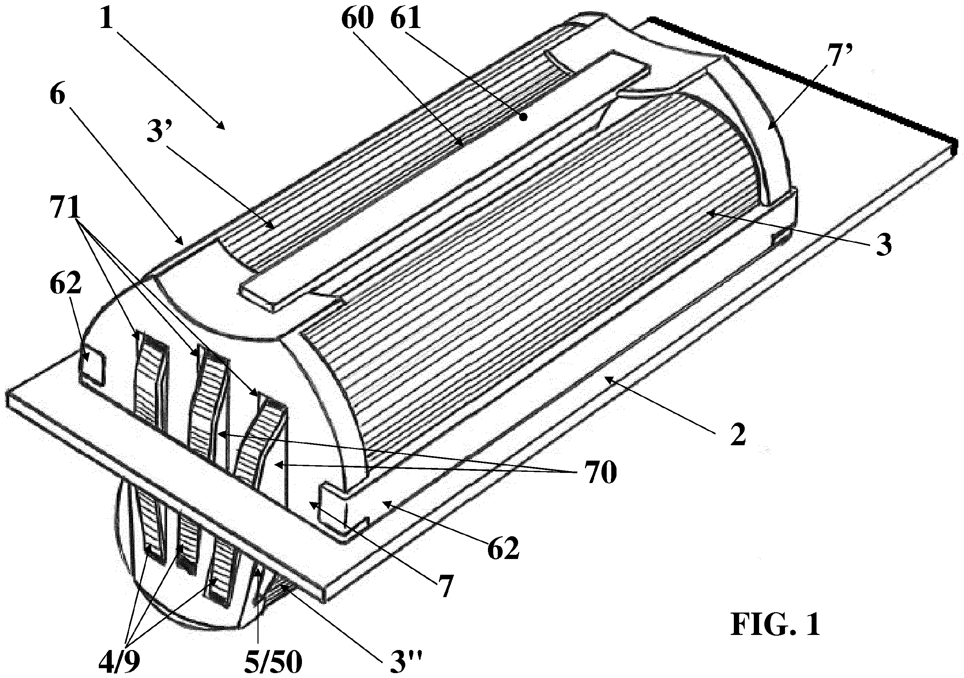

En fait et dans le cas d'un dispositif 1 comportant une pluralité de batteries (3 ; 3' ; 3") tel qu'illustré sur la figure 1 en annexe, l'ensemble amovible 6 comporte deux têtes de connexion (7 ; 7') dont l'une 7 équipe, alors, l'une des deux extrémités de ces batteries (3 ; 3' ; 3") tandis que l'autre 7' équipe l'autre des deux extrémités de ces batteries (3 ; 3' ; 3").

Pour pouvoir équiper la ou les batteries (3 ; 3' ; 3"), cette ou ces têtes de connexion (7 ; 7') comportent au moins un moyen de réception pour recevoir cette batterie ou l'une de ces batteries (3 ; 3' ; 3"), plus particulièrement l'extrémité d'une telle batterie (3 ; 3' ; 3") comportant une borne électrique.

En fait et tel que visible sur la figure 1 en annexe, l'ensemble amovible 6 peut comporter une pluralité de batteries (3 ; 3' ; 3"). Dans ce cas, la ou les têtes de connexion (7 ; 7') comportent, chacune, une pluralité de moyens de réception, chacun conçu pour recevoir une de ces batteries (3 ; 3' ; 3").

A ce propos, on observera qu'un tel moyen de réception adopte la forme d'un logement qui présente une forme et/ou des dimensions définies pour recevoir une telle batterie (3 ; 3' ; 3"), ceci de manière serrée. Ceci permet, avantageusement, de disposer d'un ensemble amovible 6 cohésif.

Un tel moyen de réception est, cependant, conçu pour permettre le retrait d'une telle batterie (3 ; 3' ; 3"), ceci en vue de son remplacement.

Tel que visible sur les figures en annexe, la ou les têtes de connexion (7 ; 7') adoptent, plus particulièrement, la forme d'un embout.

Tel que mentionné ci-dessus, l'ensemble amovible 6 peut comporter une pluralité de batteries (3 ; 3' ; 3").

Dans ce cas, la ou les têtes de connexion (7 ; 7') comportent une pluralité d'organes élastiques déformés 9 pour connecter individuellement chaque batterie (3 ; 3' ; 3") à la carte 2.

Selon un mode particulier de réalisation, la ou les têtes de connexion (7 ; 7') comportent autant d'organes élastiques déformés 9 que de batteries (3 ; 3' ; 3").

Lorsque l'ensemble amovible 6 comporte une pluralité de batteries (3 ; 3' ; 3"), la carte de circuit imprimé 2 peut comporter des moyens de gestion pour gérer le raccordement électrique d'au moins deux de ces batteries (3 ; 3' ; 3") entre elles, selon le cas et/ou alternativement, en série ou en parallèle.

Cette caractéristique permet, avantageusement, d'une part et pour un raccordement en parallèle (respectivement en série), de procéder à un rechargement de ces batteries (3 ; 3' ; 3"), notamment par l'intermédiaire d'un panneau photovoltaïque que comporte un système d'occultation par exemple (comportant le dispositif 1 conforme à l'invention) et, d'autre et pour un raccordement en série (respectivement en parallèle), de commander ou d'alimenter un moteur électrique, notamment que comporte un tel système d'occultation.

Selon un mode de réalisation préféré illustré dans les figures en annexe, ledit ensemble amovible 6 comporte un support 60, recevant la ou les batteries (3 ; 3' ; 3"), et comportant, d'une part, deux des têtes de connexion (7 ; 7') et, d'autre part, une embase 61 à partir de laquelle s'étendent ces deux têtes de connexion (7 ; 7').

De préférence, ledit support 60 adopte la forme d'un berceau ou d'une cage recevant, intérieurement, la ou les batteries (3 ; 3' ; 3").

De plus, dans ce support 60, l'une 7 des deux têtes de connexion (7 ; 7') s'étend à partir de l'une des extrémités de l'embase 61 tandis que l'autre 7' de ces deux têtes de connexion (7 ; 7') s'étend à partir de l'autre des deux extrémités de l'embase 61.

Une autre caractéristique consiste en ce que ce support 60 est de type monobloc.

De manière alternative ou (et de préférence) additionnelle, au moins une des deux têtes de connexion (7 ; 7') est mobile par rapport à l'embase 61, plus particulièrement mobile en rotation, ceci pour la mise en place de la ou des batteries (3 ; 3' ; 3") au sein du support 60. Un mode préféré de réalisation consiste en ce que ce sont les deux têtes de connexion (7 ; 7') qui sont mobiles par rapport à l'embase 61, ceci en rotation.

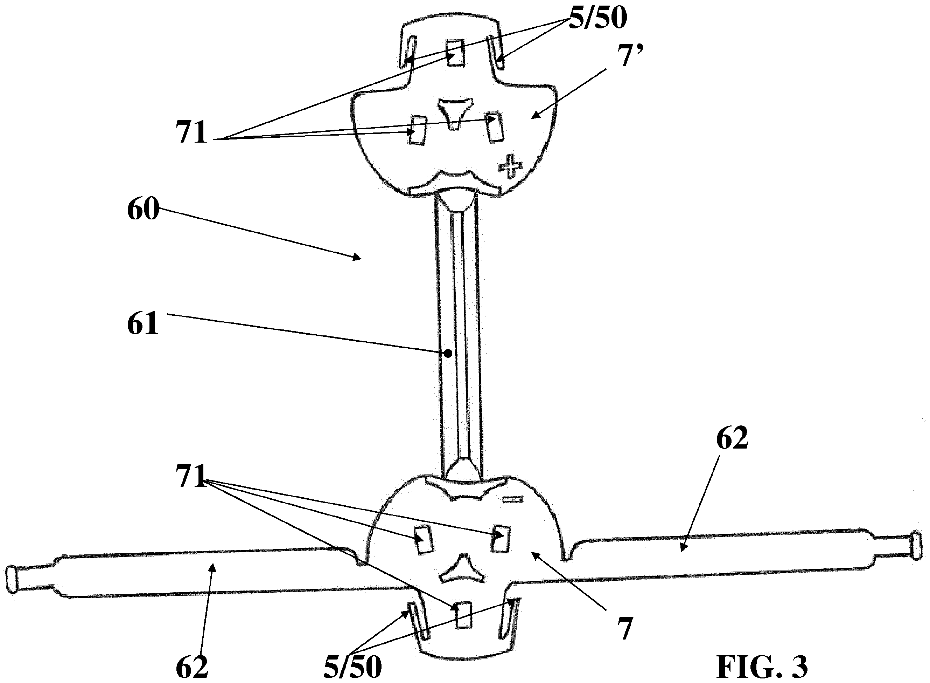

Cette caractéristique permet, avantageusement, audit support 60 d'adopter, d'une part, une configuration déployée (illustrée figure 3) pour la mise en place de la ou des batteries (3 ; 3' ; 3") au sein du support 60 ou pour le retrait de cette ou ces batteries (3 ; 3' ; 3") hors de ce support 60 et, d'autre part, une configuration repliée (illustrée dans la figure 1) pour positionner l'ensemble amovible 6 à l'intérieur du logement 8 de la carte 2.

Une caractéristique additionnelle consiste, alors, en ce que ce support 60 comporte des moyens de maintien 62 pour maintenir ce support 60 dans une telle configuration repliée, ceci en vue de maintenir ledit support 60 refermé sur la ou les batteries (3 ; 3' ; 3"). De tels moyens de maintien 62 adoptent la forme d'au moins un bras, d'une part, s'étendant à partir d'une 7 des deux têtes de connexion (7 ; 7') et en direction de l'autre 7' de ces deux têtes de connexion (7 ; 7'), et, d'autre part, comportant un moyen d'accrochage, notamment équipant une extrémité libre d'un tel bras, et conçu pour coopérer avec l'autre 7' de ces deux têtes de connexion (7 ; 7').

Une autre caractéristique de ce dispositif 1 consiste en ce que sa carte 2 comporte un logement 8 à l'intérieur duquel est positionné (voire immobilisé) ledit ensemble amovible 6.

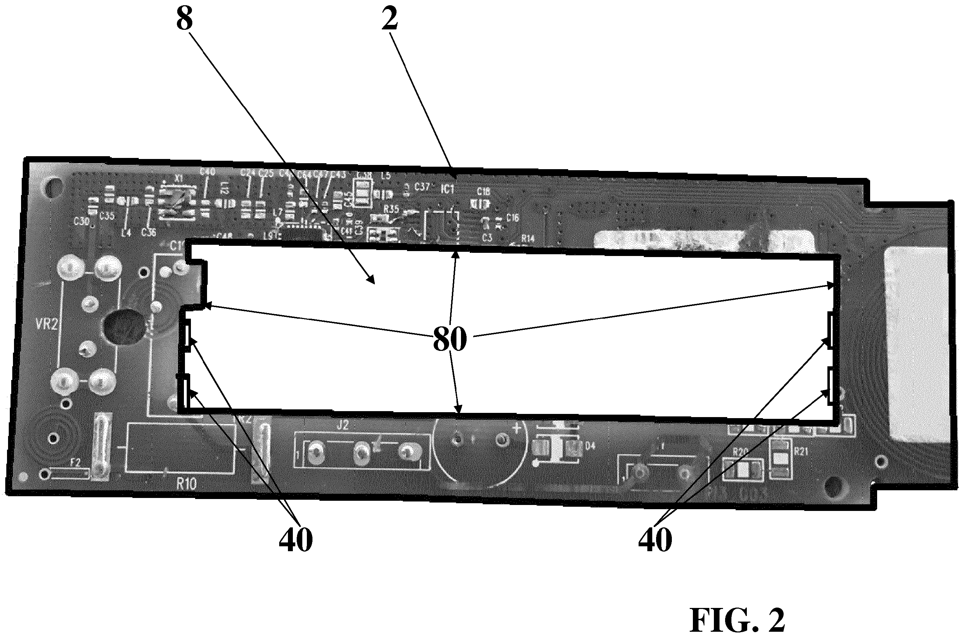

En fait, tel que visible figure 2, un tel logement 8 adopte, de préférence, la forme d'un trou traversant.

Un tel logement 8 est localisé en retrait par rapport aux bords de ladite carte 2 (plus particulièrement par rapport à l'ensemble des bords de cette carte 2), de préférence au centre de cette carte 2. Ceci permet, avantageusement, de conférer à la carte 2 une rigidité suffisante pour résister aux contraintes qui s'exercent sur elle par les moyens de connexion 4 et/ou d'immobilisation 5.

Un tel logement 8 est, de préférence, constitué par une découpe de la carte 2.

Tel que visible sur la figure 1, l'ensemble amovible 6 s'étend au travers dudit logement 8 de la carte 2 et/ou de part et d'autre de cette carte 2. Une telle caractéristique permet d'éviter un porte-à-faux de cet ensemble amovible 6 (et, plus particulièrement, de la ou des batteries que comporte cet ensemble amovible 6) et/ou de centrer cet ensemble amovible 6 (et, plus particulièrement, cette ou ces batteries que comporte cet ensemble amovible 6), ceci par rapport à la carte 2.

Une autre caractéristique consiste en ce qu'un tel logement 8 est délimité par des parois 80 qui, dans le cas d'un logement 8 sous forme d'un trou traversant, sont constituées, chacune, par un champ que présente la carte 2.

Tel que mentionné ci-dessus, le dispositif 1 comporte des moyens de connexion 4 pour connecter électriquement la carte 2 et la ou les batteries (3 ; 3' ; 3").

Aussi et selon l'invention, ces moyens de connexion 4 comportent au moins un organe élastique déformé 9, que comportent la ou les têtes de connexion (7 ; 7') de l'ensemble amovible 6, et qui coopère avec ladite carte 2.

Dans le cas particulier d'un dispositif 1 comportant une unique tête de connexion 7, celle-ci 7 comporte, alors, au moins deux organes élastiques déformés 9.

Cependant et selon le mode de réalisation préféré dans lequel le dispositif 1 comporte deux têtes de connexion (7 ; 7'), soit l'une de ces deux têtes de connexion (7 ; 7') comporte au moins deux organes élastiques déformés 9, soit (et de préférence) chaque tête de connexion (7 ; 7') comporte au moins un tel organe élastique déformé 9.

Un mode de réalisation préféré consiste, cependant, en ce que, pour un dispositif 1 comportant deux têtes de connexion (7 ; 7'), chacune de ces deux têtes de connexion (7 ; 7') comporte autant d'organes élastiques déformés 9 que l'ensemble amovible 6 comporte de batteries (3 ; 3' ; 3"). En fait, chaque organe élastique déformé 9, que comporte une de ces deux têtes de connexion (7 ; 7'), coopère avec une des batteries (3 ; 3' ; 3") de l'ensemble amovible 6, plus particulièrement avec une des bornes d'une telle batterie (3 ; 3' ; 3").

Tel que visible sur la figure 1, l'ensemble amovible 6 comporte trois batteries (3 ; 3' ; 3") tandis que chacune des deux têtes de connexion (7 ; 7') comporte trois organes élastiques déformés 9, chacun coopérant avec une des batteries (3 ; 3' ; 3"), plus particulièrement avec une des bornes d'une telle batterie (3 ; 3' ; 3").

Ainsi, les moyens de connexion 4 comportent le ou les organes élastiques déformés 9. De manière additionnelle, ces moyens de connexion 4 comportent, alors, également, au moins un contact électrique 40, que comporte la carte 2, et qui coopère, chacun, avec ledit ou l'un desdits organes élastiques déformés 9.

Tel que mentionné ci-dessus, le logement 8 est délimité par des parois 80. En fait, l'une au moins de ces parois 80 comporte, alors, le ou les contacts électriques 40 susmentionnés.

Dans le cas particulier d'un logement 8 sous forme d'un trou traversant, c'est, plus particulier, au moins un des champs de la carte 2, qui délimite un tel logement 8, et qui comporte le ou les contacts électriques 40.

Tel que mentionné ci-dessus, lesdits moyens de connexion 4 comportent au moins un organe élastique déformé 9.

En fait, un tel organe élastique 9 est déformé au moins lorsque l'ensemble amovible 6 est positionné à l'intérieur du logement 8. Le fait que cet organe élastique 9 soit déformé à l'intérieur du logement 8 implique que cet organe élastique 9 est sous contrainte à l'intérieur de ce logement 8. En réaction à cette contrainte, cet organe élastique 9 exerce une action, plus particulièrement sous forme d'une pression, ceci sur la batterie (3 ; 3' ; 3") et/ou sur la carte 2 (plus particulièrement sur la paroi 80 du logement 8 de cette carte 2 et/ou sur le contact électrique 40 de cette carte 2) avec laquelle un tel organe élastique 9 coopère.

Cette action permet d'assurer la connexion électrique entre la ou les batteries (3 ; 3' ; 3") et ladite carte 2, ceci en étant sûr de l'efficacité et de la qualité de cette connexion.

De manière additionnelle, cette action permet d'assurer un maintien de l'ensemble amovible 6 par rapport à la carte 2 et/ou un maintien de la ou des batteries (3 ; 3' ; 3") au sein de l'ensemble amovible 6 (plus particulièrement par rapport au support 60) ou par rapport à la carte 2. Un tel maintien est assuré selon une direction parallèle au plan dans lequel s'étend cette carte 2, notamment en vue d'éviter un déplacement de faible amplitude de cet l'ensemble amovible 6 par rapport à ladite carte 2 et/ou de la ou des batteries (3 ; 3' ; 3") au sein de cet ensemble amovible 6 ou par rapport à la carte 2, ceci selon cette direction.

En fait, le dispositif 1 conforme à l'invention (plus particulièrement l'ensemble amovible 6, la ou les têtes de connexion 7 ; 7' et/ou le ou les organes élastiques déformés 9) est conçu en sorte que cette action (plus particulièrement sous forme d'une pression) soit constituée par une force qui s'exerce selon une direction au moins parallèle au plan dans lequel s'étend la carte 2, voire s'étendant dans ce plan.

Tel que mentionné ci-dessus, le dispositif 1 comporte, également, les moyens d'immobilisation 5 pour immobiliser la ou les batteries (3 ; 3' ; 3") par rapport à la carte de circuit imprimé 2.

En fait, ces moyens d'immobilisation 5 comportent, d'une part, des moyens d'immobilisation pour immobiliser la ou les batteries (3 ; 3' ; 3") par rapport à la tête 7 ou aux têtes de connexion (7 ; 7') et, d'autre part, des moyens d'immobilisation pour immobiliser l'ensemble amovible 6 par rapport à la carte 2.

A ce propos, on observera que les moyens d'immobilisation, pour immobiliser la ou les batteries (3 ; 3' ; 3") par rapport à la tête 7 ou aux têtes de connexion (7 ; 7'), comportent le ou les moyens de réception mentionnés ci-dessus et que comportent la ou les têtes de connexion (7 ; 7').

De manière alternative ou (et de préférence) additionnelle, ces moyens d'immobilisation peuvent, encore, être constitués par le support 60 décrit ci-dessus.

En ce qui concerne les moyens d'immobilisation, pour immobiliser l'ensemble amovible 6 par rapport à la carte 2, ceux-ci comportent des moyens d'accrochage 50, d'une part, que comportent le support 60 et/ou la ou les têtes de connexion (7 ; 7') et, d'autre part, qui sont conçus pour s'accrocher sur la carte de circuit imprimé 2, plus particulièrement sur une bordure du logement 8 de cette carte 2.

En fait, de tels moyens d'accrochage 50 adoptent, plus particulièrement, la forme de clips ou analogue.

En fait, le ou les organes élastiques déformés 9 sont constitués, chacun, par une lame élastique, par un ressort ou analogue.

Quoi qu'il en soit, un tel organe élastique 9 est réalisé en un matériau conduisant le courant électrique, notamment en métal.

Tel que mentionné ci-dessus, la ou les têtes de connexion (7 ; 7') comportent le ou les organes élastiques déformés 9.

A ce propos, on observera qu'une telle tête de connexion (7 ; 7') comporte, alors, des moyens de solidarisation 70 pour solidariser au moins un tel organe élastique 9 d'une telle tête de connexion (7 ; 7').

De manière additionnelle, une telle tête de connexion (7 ; 7') comporte, également, au moins un logement 71, d'une part, à l'intérieur duquel est positionné au moins un tel organe élastique 9, voire à l'intérieur duquel est monté au moins un tel organe élastique 9 (plus particulièrement par l'intermédiaire des moyens de solidarisation 70 susmentionnés) et, d'autre part, à l'extérieur duquel s'étend un tel organe élastique 9 pour coopérer avec ladite carte 2 et/ou avec la ou les batteries (3 ; 3' ; 3").

## Revendications

1. Dispositif d'alimentation ou de commande (1) d'un moteur électrique, ce dispositif (1) comportant :
- une carte de circuit imprimé (2) comportant un logement (8) ;
- au moins une batterie (3 ; 3' ; 3") ;
- des moyens de connexion (4) pour connecter électriquement la carte (2) et la ou les batteries (3 ; 3' ; 3") ;
- des moyens d'immobilisation (5) pour immobiliser la ou les batteries (3 ; 3' ; 3") par rapport à la carte (2);
- un ensemble amovible (6) comportant, d'une part, la ou les batteries (3 ; 3' ; 3") et, d'autre part, au moins une tête de connexion (7 ; 7') équipant cette ou ces batteries (3 ; 3' ; 3");
- **caractérisé par le fait que** :
- ledit ensemble amovible (6) est positionné à l'intérieur du logement (8) de la carte (2) ;
- les moyens de connexion (4) comportent, d'une part, au moins un organe élastique déformé (9), que comportent la ou les têtes de connexion (7 ; 7') de l'ensemble amovible (6), et qui coopère avec ladite carte (2) ainsi qu'avec la ou les batteries (3 ; 3' ; 3") et, d'autre part, au moins un contact électrique (40), que comporte la carte (2), et qui coopère, chacun, avec ledit ou l'un desdits organes élastiques déformés (9).

2. Dispositif d'alimentation ou de commande (1), selon la revendication 1, **caractérisé par le fait que** l'ensemble amovible (6) comporte deux têtes de connexion (7 ; 7') dont l'une (7) équipe l'une des deux extrémités de la ou des batteries (3 ; 3' ; 3") tandis que l'autre (7') équipe l'autre des deux extrémités de cette ou de ces batteries (3 ; 3' ; 3").

3. Dispositif d'alimentation ou de commande (1), selon l'une quelconque des revendications précédentes, **caractérisé par le fait que** la ou les têtes de connexion (7 ; 7') comportent au
moins un moyen de réception pour recevoir la batterie (3) ou l'une des batteries (3 ; 3' ; 3"), plus particulièrement l'extrémité d'une telle batterie (3 ; 3' ; 3") comportant une borne électrique.

4. Dispositif d'alimentation ou de commande (1), selon l'une quelconque des revendications précédentes, **caractérisé par le fait que** l'ensemble amovible (6) comporte une pluralité de batteries (3 ; 3' ; 3") tandis que la ou les têtes de connexion (7 ; 7') comportent une pluralité d'organes élastiques déformés (9) pour connecter individuellement chaque batterie (3 ; 3' ; 3") à la carte (2).

5. Dispositif d'alimentation ou de commande (1), selon l'une quelconque des revendications précédentes, **caractérisé par le fait que** l'ensemble amovible (6) comporte un support (60), recevant la ou les batteries (3 ; 3' ; 3"), et comportant, d'une part, deux des têtes de connexion (7 ; 7') et, d'autre part, une embase (61) à partir de laquelle s'étendent ces deux têtes de connexion (7 ; 7').

6. Dispositif d'alimentation ou de commande (1), selon la revendication 5, **caractérisé par le fait que** le support (60) est de type monobloc et/ou qu'au moins une des deux têtes de connexion (7 ; 7') est mobile par rapport à l'embase (61), plus particulièrement mobile en rotation, ceci pour la mise en place de la ou des batteries (3 ; 3' ; 3") au sein du support (60).

7. Dispositif d'alimentation ou de commande (1), selon l'une quelconque des revendications précédentes, **caractérisé par le fait que** le logement (8), que comporte la carte (2), adopte la forme d'un trou traversant et/ou est constitué par une découpe de la carte (2).

8. Dispositif d'alimentation ou de commande (1), selon l'une quelconque des revendications précédentes, **caractérisé par le fait que** le logement (8) de la carte (2) est délimité par des parois (80) dont l'une au moins comporte le ou les contacts électriques (40).

9. Dispositif d'alimentation ou de commande (1), selon l'une quelconque des revendications précédentes, **caractérisé par le fait que** le logement (8) de la carte (2), d'une part, adopte la forme d'un trou traversant et, d'autre part, est délimité par des champs de la carte (2) dont l'un au moins comporte le ou les contacts électriques (40).

10. Dispositif d'alimentation ou de commande, selon l'une quelconque des revendications précédentes, **caractérisé par le fait que** le ou les organes élastiques déformés (9) sont constitués par une lame élastique ou un ressort.

11. Dispositif d'alimentation ou de commande, selon l'une quelconque des revendications précédentes, **caractérisé par le fait que** les moyens d'immobilisation (5) de la ou des batteries (3 ; 3' ; 3") par rapport à la carte (2) comportent, d'une part, des moyens d'immobilisation pour immobiliser la ou les batteries (3 ; 3' ; 3") par rapport à la tête (7) ou aux têtes de connexion (7 ; 7') et, d'autre part, des moyens d'immobilisation pour immobiliser l'ensemble amovible (6) par rapport à la carte (2) .

## Patentansprüche

1. Energieversorgungs- oder Steuervorrichtung (1) für einen Elektromotor, wobei diese Vorrichtung (1) Folgendes umfasst:
- eine gedruckte Schaltplatte (2), die eine Aufnahme (8) umfasst;
- mindestens eine Batterie (3 ; 3' ; 3") ;
- Verbindungsmittel (4) zum elektrischen Verbinden der Platte (2) und der Batterie bzw. Batterien (3 ; 3' ; 3") ;
- Immobilisierungsmittel (5) zum Immobilisieren der Batterie bzw. Batterien (3; 3' ; 3") relativ zu der Platte (2) ;
- eine abnehmbare Einheit (6), die einerseits die Batterie bzw. Batterien (3 ; 3' ; 3") und andererseits mindestens einen Verbindungskopf (7 ; 7') umfasst, mit dem diese Batterie bzw. Batterien (3 ; 3' ; 3") ausgerüstet sind ;
- **dadurch gekennzeichnet, dass** :
- die abnehmbare Einheit (6) innerhalb der Aufnahme (8) der Platte (2) positioniert ist ;
- die Verbindungsmittel (4) einerseits mindestens ein verformtes elastisches Organ (9), welches der bzw. die Verbindungsköpfe (7 ; 7') der abnehmbaren Einheit (6) umfasst und das mit der Platte (2) sowie mit der bzw. den Batterien (3 ; 3' ; 3") zusammenwirkt, und andererseits mindestens einen elektrischen Kontakt (40), welchen die Platte (2) umfasst und der jeweils mit dem besagten bzw. mit einem der besagten deformierten elastischen Organe (9) zusammenwirkt, umfassen.

2. Energieversorgungs- oder Steuervorrichtung (1) nach Anspruch 1, **dadurch gekennzeichnet, dass** die abnehmbare Einheit (6) zwei Verbindungsköpfe (7 ; 7') umfasst, von denen der eine (7) ein der beiden Enden der Batterie bzw. Batterien (3; 3'; 3") ausstattet, während der andere (7') das andere der beiden Enden dieser Batterie bzw. Batterien (3 ; 3' ; 3") ausstattet.

3. Energieversorgungs- oder Steuervorrichtung (1) nach irgendeinem der vorhergehenden Ansprüche, **dadurch gekennzeichnet, dass** der bzw. die Verbindungsköpfe (7 ; 7') mindestens ein Aufnahmemittel zum Aufnehmen der Batterie (3) bzw. einer der Batterien (3 ; 3' ; 3") umfassen, wobei insbesondere das Ende einer solchen Batterie (3 ; 3' ; 3") eine elektrische Anschlußklemme umfasst.

4. Energieversorgungs- oder Steuervorrichtung (1) nach irgendeinem der vorhergehenden Ansprüche, **dadurch gekennzeichnet, dass** die abnehmbare Einheit (6) eine Vielzahl von Batterien (3 ; 3' ; 3") umfasst, während der bzw. die Verbindungsköpfe (7 ; 7') eine Vielzahl von deformierten elastischen Organen (9) zum individuellen Verbinden jeder Batterie (3 ; 3' ; 3") mit der Platte (2) umfassen.

5. Energieversorgungs- oder Steuervorrichtung (1) nach irgendeinem der vorhergehenden Ansprüche, **dadurch gekennzeichnet, dass** die abnehmbare Einheit (6) einen Träger (60) umfasst, der die Batterie bzw. Batterien (3 ; 3' ; 3") aufnimmt, und einerseits zwei Verbindungsköpfe (7 ; 7') und andererseits eine Basis (61), ab der sich diese beiden Verbindungsköpfe erstrecken (7 ; 7'), umfasst.

6. Energieversorgungs- oder Steuervorrichtung (1) nach Anspruch 5, **dadurch gekennzeichnet, dass** der Träger (60) einstückiger Art ist und/oder dass mindestens einer der beiden Verbindungsköpfe (7 ; 7') relativ zur Basis (61) beweglich, insbesondere drehbeweglich ist, und zwar zur Aufstellung der Batterie bzw. Batterien (3 ; 3' ; 3") innerhalb des Trägers (60).

7. Energieversorgungs- oder Steuervorrichtung (1) nach irgendeinem der vorhergehenden Ansprüche, **dadurch gekennzeichnet, dass** die Aufnahme (8), welche die Platte (2) umfasst, die Form eines durchgehendes Lochs annimmt und/oder aus einem Plattenausschnitt (2) besteht.

8. Energieversorgungs- oder Steuervorrichtung (1) nach irgendeinem der vorhergehenden Ansprüche, **dadurch gekennzeichnet, dass** die Aufnahme (8) der Platte (2) durch Wände (80) begrenzt ist, von denen mindestens eine den bzw. die elektrischen Kontakte (40) umfasst.

9. Energieversorgungs- oder Steuervorrichtung (1) nach irgendeinem der vorhergehenden Ansprüche, **dadurch gekennzeichnet, dass** die Aufnahme (8) der Karte (2) einerseits die Form eines durchgehendes Lochs annimmt und andererseits durch Plattenkanten (2) begrenzt ist, von denen mindestens eine den bzw. die elektrischen Kontakte (40) umfasst.

10. Energieversorgungs- oder Steuervorrichtung nach irgendeinem der vorhergehenden Ansprüche, **dadurch gekennzeichnet, dass** das bzw. die deformierten elastischen Organe (9) aus einer elastischen Klinge oder einer Feder bestehen.

11. Energieversorgungs- oder Steuervorrichtung nach irgendeinem der vorhergehenden Ansprüche, **dadurch gekennzeichnet, dass** die Mittel zum Immobilisieren (5) der Batterie bzw. Batterien (3 ; 3' ; 3") relativ zu der Platte (2) einerseits Immobilisierungsmittel zum Immobilisieren der Batterie bzw. Batterien (3 ; 3' ; 3") relativ zu dem Verbindungskopf (7) oder relativ zu den Verbindungsköpfen (7 ; 7') und andererseits Immobilisierungsmittel zum Immobilisieren der abnehmbaren Einheit (6) relativ zu der Platte (2) umfassen.

## Claims

1. Power supply or control device (1) for an electric motor, this device (1) including:
- a printed circuit board (2) including an accommodation (8);
- at least one battery (3 ; 3' ; 3");
- connecting means (4) for electrically connecting the board (2) and the battery or batteries (3 ; 3' ; 3");
- immobilizing means (5) for immobilizing the battery or batteries (3 ; 3'; 3") relative to the board (2);
- a removable assembly (6) including, on the one hand, the battery or batteries (3 ; 3' ; 3") and, on the other hand, at least one connecting head (7 ; 7'), which this or these batteries (3 ; 3' ; 3") are provided with;
- wherein:
- said removable assembly (6) is positioned inside the accommodation (8) of the board (2);
- the connecting means (4) include, on the one hand, at least one deformed resilient organ (9), which the connecting head or heads (7 ; 7') of the removable assembly (6) include, and which cooperates with said board (2) as well as with the battery or batteries (3 ; 3' ; 3") and, on the other hand, at least one electrical contact (40), which the board (2) includes, and each of which cooperates with said or one of said deformed resilient organ (9).

2. Power supply or control device (1) according to claim 1, wherein the removable assembly (6) includes two connecting heads (7 ; 7'), one (7) of which is provided on one of the two ends of the battery or batteries (3 ; 3' ; 3"), while the other one (7') is provided on the other one of the two ends of this or these batteries (3 ; 3' ; 3")

3. Power supply or control device (1) according to any one of the preceding claims, wherein the connecting head or heads (7 ; 7') include at least one receiving means for receiving the battery (3) or one of the batteries (3 ; 3' ; 3"), more particularly the end of such a battery (3 ; 3' ; 3") including an electrical terminal.

4. Power supply or control device (1) according to any one of the preceding claims, wherein the removable assembly (6) includes a plurality of batteries (3 ; 3' ; 3"), while the connecting head or heads (7 ; 7') include a plurality of deformed resilient organs (9) for individually connecting each battery (3 ; 3' ; 3") to the board (2).

5. Power supply or control device (1) according to any one of the preceding claims, wherein the removable assembly (6) includes a support (60) receiving the battery or batteries (3 ; 3' ; 3") and including, on the one hand, two of the connecting heads (7 ; 7') and, on the other hand, a base (61), from which these two connecting heads extend (7 ; 7').

6. Power supply or control device (1) according to claim 5, wherein the support (60) is of the single-piece type and/or at least one of the two connecting heads (7 ; 7') is movable relative to the base (61), more particularly movable in rotation, for placing the battery or batteries (3 ; 3' ; 3") within the support (60).

7. Power supply or control device (1) according to any one of the preceding claims, wherein the accommodation (8), which the board (2) includes, adopts the shape of a through hole and or is formed by a cutout in the board (2).

8. Power supply or control device (1) according to any one of the preceding claims, wherein the accommodation (8) of the board (2) is delimited by walls (80), at least one of which includes the electrical contact or contacts (40).

9. Power supply or control device (1) according to any one of the preceding claims, wherein the accommodation (8) of the board (2), on the one hand, adopts the shape of a through hole and, on the other hand, is delimited by edges of the card (2), at least one of which includes the electrical contact or contacts (40).

10. Power supply or control device according to any one of the preceding claims, wherein the deformed resilient organ or organs (9) are formed by a resilient blade or a spring.

11. Power supply or control device according to any one of the preceding claims, wherein the means for immobilizing (5) the battery or batteries (3 ; 3' ; 3") relative to the board (2) include, on the one hand, immobilizing means for immobilizing the battery or batteries (3 ; 3' ; 3") relative to the connecting head (7) or to the connecting heads (7 ; 7') and, on the other hand, immobilizing means for immobilizing the removable assembly (6) relative to the board (2).
